# EUROPÄISCHE PATENTANMELDUNG

(11) **EP 1 085 304 A1**
(43) Veröffentlichungstag der Anmeldung: **21.03.2001**
(21) Anmeldenummer: 00117074.5
(22) Anmeldetag: 09.08.2000
(51) Int. Cl.: G01F 23/38

(54) **Füllstandssensor**

(30) Priorität: 15.09.1999 DE 19944330
(71) Anmelder: Mannesmann VDO Aktiengesellschaft, 60388 Frankfurt am Main (DE)
(72) Erfinder: Eck, Karl, 60318 Frankfurt (DE)
(74) Vertreter: Rassler, Andrea, Dipl.-Phys.

(57) **Zusammenfassung**

Die Erfindung betrifft einen Füllstandssensor für eine Flüssigkeitsbehälter, vorzugsweise einen Kraftstoffbehälter für ein Kraftfahrzeug, bestehend aus einem Hebelarm, an dessen einem Ende ein Schwimmer angeordnet ist und dessen anderes Ende in einem Trägerteil gelagert ist, mindestens einem berührungslosen Magnetsensor, wobei der Hebelarm mit einer Magneteinrichtung verbunden ist und die Magneteinrichtung bei einer Auslenkung des Hebelarms derart zum Magnetsensor bewegbar ist, daß sich das auf den Magnetsensor (6) einwirkende Magnetfeld ändert, so daß der Magnetsensor ein Ausgangssignal liefert, welches dem Füllstand im Flüssigkeitsbehälter entspricht.

## Beschreibung

Gegenstand der Erfindung ist ein Füllstandssensor für einen Flüssigkeitsbehälter, insbesondere für einen Kraftstoffbehälter in einem Kraftfahrzeug, mit einem einen Schwimmer tragenden Hebelarm, dessen Schwenkbewegung in ein dem Füllstand entsprechendes elektrisches Ausgangssignal umgewandelt wird.

Derartige einen Hebelarm mit einem daran befestigten Schwimmer aufweisende Hebelgeber werden vielfach in Kraffstoffbehältern eingesetzt und sind damit bekannt. In der Regel sind diese Hebelgeber an einem Bauteil im Kraftstoffbehälter, z. B. einer Fördereinheit befestigt. Der Hebelgeber besitzt weiterhin ein Trägerteil, auf dem eine Keramik mit einem Dickschicht - Widerstandsnetzwerk angeordnet ist. Ein mit dem Hebelarm verbundener Schleifkontakt überstreicht dieses Widerstandsnetzwerk, so daß in Abhängigkeit von der Schwenkbewegung ein dem Füllstand entsprechendes elektrisches Signal gewonnen wird. Der Nachteil dieser Hebelgeber besteht darin, daß das Widerstandsnetzwerk im Kraftstoff angeordnet ist und somit beständig gegenüber diesem sein muß. Des weiteren unterliegt der Schleifkontakt einem Verschleiß. Weiterhin sind diese Hebelgeber nicht diagnosefähig, daß heißt, durch Ablagerungen oder ähnliche Effekte hervorgerufene Veränderungen der Messwerte können nicht erkannt werden, so daß mit der Zeit das Ausgangssignal nicht mehr dem tatsächlichen Füllstand entspricht.

Zur Vermeidung von Korrosion und Verschleiß am Sensor des Hebelgebers ist es bekannt, berührungslos arbeitende Sensoren, bspw. Reed-Kontakte zur Füllstandsmessung einzusetzen. Dabei werden ein oder mehrere Reed-Kontakte als Bestandteil einer Auswerteschaltung in dem Flüssigkeitsbehälter angeordnet. Ein Schwimmer, der einen Magneten trägt, ist entlang der Reed-Kontakte beweglich angeordnet. Der Magnet bewirkt, daß der in seiner Nähe befindliche Reed-Kontakt geschlossen wird, wobei mittels der Auswerteschaltung an diesem Reed-Kontakt entsprechendes elektrisches Signal gewonnen wird, das dem jeweiligen Füllstand entspricht. Nachteilig bei derartigen Füllstandssensoren ist die oft aufwendige Ausgestaltung, da entsprechend der Höhe des Flüssigkeitsbehälters mehrere Sensoren über die gesamte Höhe verteilt anzuordnen sind. Das bedingt ein relativ großes Volumen dieser Füllstandssensoren, das sich negativ auf das verbleibende Nutzvolumen des Behälters auswirkt.

Der Erfindung liegt somit die Aufgabe zugrunde, einen Füllstandssensor für einen Flüssigkeitsbehälter zu schaffen, der einfach aufgebaut ist und bei dem der oder die Sensoren nicht mit dem Medium in Berührung kommen. Weiterhin soll der Füllstandssensor einfach und in beliebiger Lage montierbar sein.

Gelöst wird die Aufgabe mit den Merkmalen des Anspruchs 1. Vorteilhafte Ausgestaltungen sind in Unteransprüchen beschrieben.

Erfindungsgemäß wird die Aufgabe mit einem Füllstandssensor, der mindestens einen berührungslosen Magnetsensor besitzt. Ein mit einem Schwimmer verbundenen Hebelarm ist mit einer Magneteinrichtung verbunden, die durch Auslenkung des Hebelarms zu dem Magnetsensor derart bewegt wird, daß sich das auf den Magnetsensor einwirkende Magnetfeld ändert. Diese Magnetfeldänderung bewirkt eine Änderung des Ausgangssignals des Magnetsensors, wobei das veränderte Ausgangssignal der Änderung des Füllstandes entspricht.

Der Vorteil dieses Füllstandssensors besteht darin, daß der Magnetsensor gekapselt sein kann, so daß er keinen Kontakt zu dem Medium im Flüssigkeitsbehälter besitzt und daß die Erfassung des Füllstandes mitttels Hebelarm und Schwimmer sich besonders einfach und preisgünstig gestaltet. Dadurch ist dieser Füllstandssensor besonders für den Einsatz in aggressiven Medien, zum Beispiel Kraftstoff geeignet. Mittels eines Trägerteils, in dem der Hebelarm gelagert ist, läßt sich der Füllstandssensor an Einbauten im Flüssigkeitsbehälter befestigen. Es ist aber auch möglich, den Füllstandssensor über einen mit dem Trägerteil verbundenen Flansch in eine Öffnung des Flüssigkeitsbehälters einzusetzen. Dabei ist der Magnetsensor im Flansch angeordnet. Das hat den Vorteil, daß der Magnetsensor belüftbar ist, so daß der Magnetsensor auch durch permeierende Medien im Flüssigkeitsbehälter nicht angegriffen wird.

In einer besonders günstigen Ausgestaltung ist die Magneteinrichtung eine mit dem Hebelarm verbundene Kurvenscheibe, die aus magnetischem Material besteht. Aufgrund dessen, daß Flüssigkeitsbehälter, insbesondere Kraftstoffbehälter von Kraftfahrzeugen kompliziert geformte Behälter sind, ist der Zusammenhang zwischen Füllhöhe und Füllmenge im Behälter nichtlinear. Dadurch ist es möglich auch bei Flüssigkeitsbehältern mit nichtlinearer Tank-Kennlinie, die Schwenkbewegung des Hebelarms in eine den Füllstand entsprechendes Ausgangssignal des Magnetsensor umzuwandeln, wenn die Kurvenscheibe entsprechend der Tank-Kennlinie ausgebildet ist. Die Umwandlung der Schwenkbewegung des Hebelarms mittels einer Kurvenscheibe hat den Vorteil, daß der Füllstandssensor an einer beliebigen Stelle des Flüssigkeitsbehälters anordbar ist. Eine ausschließlich senkrechte Anordnung des Füllstandssensors ist nicht notwendig.

Weiterhin hat es sich als vorteilhaft herausgestellt, wenn die Kurvenscheibe teilmagnetisierte Bereiche, bzw. Bereiche mit unterschiedlicher magnetischer Polung besitzt, so daß neben der Änderung der Stärke auch die Lageänderung des auf den Magnetsensor einwirkenden Magnetfeldes zu einem Ausgangssignal des Magnetsensors führt, welches dem momentanen Füllstand im Flüssigkeitsbehälter entspricht.

In einer anderen vorteilhaften Ausgestaltung ist die Magneteinrichtung ein beweglich angeordneter Magnet, der auf der Stirnseite der Kurvenscheibe derart zur Auflage gebracht wird, daß sich bei entsprechender Bewegung der Kurvenscheibe der Magnet linear zu dem Magnetsensor bewegt. Der Vorteil besteht darin, daß die Kurvenscheibe nicht mehr aus einem magnetischem Material sondern z.B. aus einem Kunststoff bestehen kann.

Um den permanenten Kontakt des Magneten zur Kurvenscheibe zu gewährleisten, kann der Magnet mittels einer Feder gegen die Kurvenscheibe zur Anlage gebracht werden. Das hat den Vorteil, daß der Magnet nicht ausschließlich senkrecht auf der Kurvenscheibe stehen muß.

In einer weiteren günstigen Ausgestaltung ist zwischen dem Magnet und der Kurvenscheibe ein Stößel angeordnet. Dadurch lassen sich Hebelarm und Magnetsensor räumlich entkoppeln, so daß der Magnetsensor mittels des Flansches in der Behälterwandung angeordnet ist, während der Hebelarm mit dem Schwimmer an einer geeigneten Stelle im Flüssigkeitsbehälter angeordnet sind.

In einer vorteilhaften Ausgestaltung ist der Füllstandssensor in eine Öffnung der Seitenwand des Flüssigkeitsbehälters eingesetzt. Das hat bei Kraftstoffbehältern von Kraftfahrzeugen den Vorteil, daß diese Stellen insbesondere zur Reparatur- und Wartungsarbeiten leichter zugänglich, bzw. ohne Demontage des Kraftstofftanks erreichbar sind.

Als berührungsloser Magnetsensor können beispielsweise passive magnetische Positionssensoren, wie sie in DE 196 48 539 A1 offenbart sind, eingesetzt werden. Darüber hinaus sind aber auch Hall-Elemente, Reed-Kontakte oder ähnliche Sensoren denkbar. Diese Sensoren haben den Vorteil, daß sie diagnosefähig sind. Durch eine entsprechende Elektronik lassen sich z. B. Referenzpunkte abfragen oder abgleichen.

An zwei Ausführungsbeispielen wird die Erfindung näher erläutert. Dabei zeigen
- Figur 1:: einen von oben in einen Flüssigkeitsbehälter einsetzbaren Füllstandssensor,
- Figur 2:: einen in eine Seitenwand eines Flüssigkeitsbehälters eingesetzten Füllstandssensor und
- Figur 3:: eine dritte Ausgestaltung des erfindungsgemäßen Füllstandsensors.

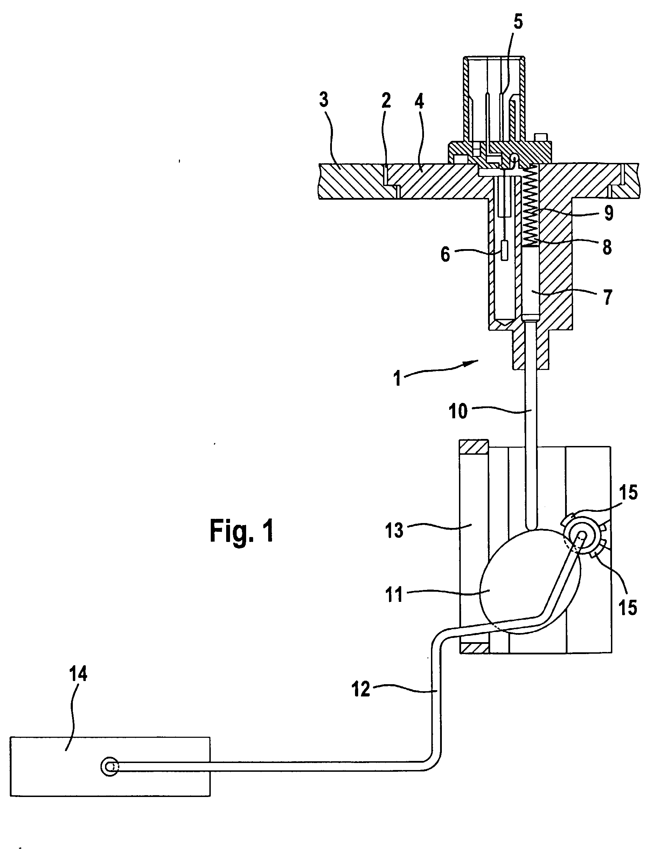

Der in Figur 1 dargestellte Füllstandssensor 1 ist in eine Öffnung 2 an der Oberseite eines Kraftstoffbehälters 3 eingesetzt. Der die Öffnung 2 verschießende Flansch 4 besitzt an der nach außen gewandten Seite Anschlüsse 5 für den aus einem Hall-Element bestehenden Magnetsensor 6. Dieser Magnetsensor 6 liefert ein Ausgangssignal, das dem auf ihn einwirkenden Magnetfeld entspricht. Dem Magnetsensor 6 gegenüberliegend ist ein Magnet 7 in einer Bohrung 8 des Flansches 4 beweglich angeordnet. Der Magnet 7 wird mittels einer Feder 9 gegen einen Stößel 10 vorgespannt. Gleichzeitig wird dadurch der Stößel 10 im permanenten Kontakt zu einer Kurvenscheibe 11 gehalten. Die Kurvenscheibe 11 ist fest mit einem Hebelarm 12 verbunden, der an einem Trägerteil 13 gelagert ist, wobei das Trägerteil 13 mit dem Flansch 4 verbunden ist. Ein mit dem Hebelarm 12 verbundener Schwimmer 14 lenkt den Hebelarm 12 in Abhängigkeit vom Füllstand aus. Durch diese Auslenkung wird die Kurvenscheibe 11 bewegt, was zu einer vertikalen Verschiebung des Stößels 10 und damit des Magneten 7 führt. Durch diese Verschiebung wird der Magnet 7 relativ zum Magnetsensor 6 verschoben, so daß sich das auf den Magnetsensor einwirkende Magnetfeld ändert. Durch diese Magnetfeldänderung verändert sich das Ausgangssignal des Magnetsensors 6, wobei diese Änderung der Änderung des Füllstandes entspricht. Durch Anschläge 14 wird die Schwenkbewegung des Hebelarms 12 begrenzt.

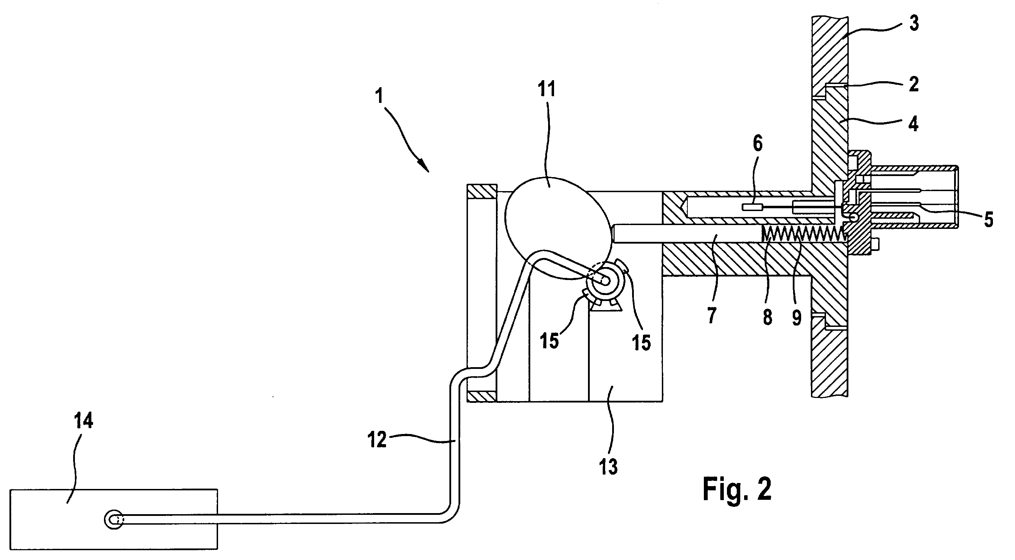

Der in Figur 2 dargestellt Füllstandssensor 1 besitzt einen Aufbau ähnlich dem des Füllstandssensors in Figur 1. Der Unterschied besteht darin, daß dieser Füllstandssensor 1 in eine Öffnung 2 einer Seitenwand eines Kraftstoffbehälters 3 eingesetzt ist. Weiterhin steht der Magnet 7 direkt mit der Kurvenscheibe 11 ohne Zwischenschaltung eines weiteren Bauteils in Verbindung. Die Wirkungsweise des Füllstandssensors 1 entspricht der des in Figur 1 beschriebenen Füllstandssensors.

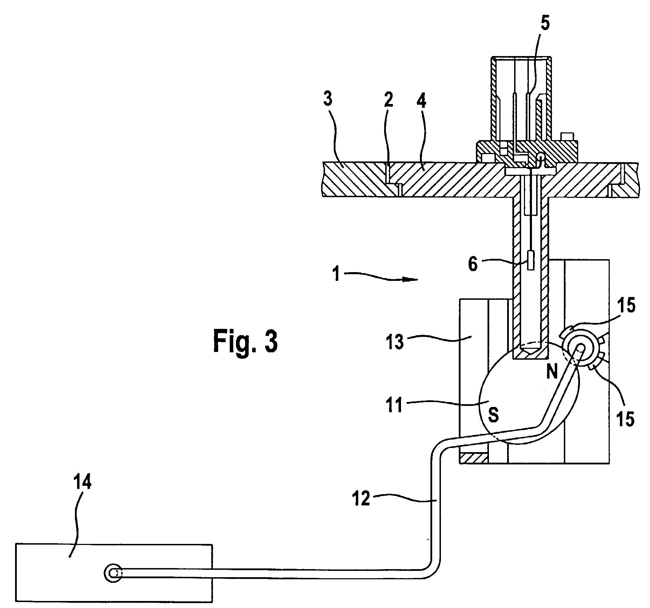

Bei dem in Figur 3 dargestellten Füllstandssensor 1 besteht die Kurvenscheibe 11 aus einem magnetischen Material, wobei einzelne Bereich der Kurvenscheibe 11 eine unterschiedliche Polung aufweisen. Die Kurvenscheibe 11 ist derart zu dem Magnetsensor 6 angeordnet, daß bei einer Auslenkung des Hebelarms 12 die Kurvenscheibe 11 bewegt wird, was zu einer Magnetfeldänderung am Magnetsensor 6 führt.

## Patentansprüche

1. Füllstandssensor für eine Flüssigkeitsbehälter, vorzugsweise einen Kraftstoffbehälter für ein Kraftfahrzeug, bestehend aus einem Hebelarm, an dessen einem Ende ein Schwimmer angeordnet ist und dessen anderes Ende in einem Trägerteil gelagert ist, mindestens einem berührungslosen Magnetsensor, wobei aus der Schwimmerposition ein dem Füllstand entsprechendes Ausgangssignal gewinnbar ist, **dadurch gekennzeichnet,** daß mit dem Hebelarm (12) eine Magneteinrichtung (7,11) verbunden ist und das die Magneteinrichtung (7,11) bei einer Auslenkung des Hebelarms (12) derart zum Magnetsensor (6) bewegbar ist, daß sich das auf den Magnetsensor (6) einwirkende Magnetfeld ändert.

2. Füllstandssensor nach Anspruch 1, **dadurch gekennzeichnet,** daß der Magnetsensor (6) ein Hall-Element, ein passiver magnetischer Positionssensor oder ein Reed-Kontakt ist.

3. Füllstandssensor nach Anspruch 1 und 2, **dadurch gekennzeichnet,** daß die Magneteinrichtung eine Kurvenscheibe (11) aus magnetischem Material ist.

4. Füllstandssensor nach Anspruch 1 bis 3, **dadurch gekennzeichnet,** daß die Kurvenscheibe (11) mindestens 2 Bereiche unterschiedlicher magnetischer Polung besitzt.

5. Füllstandssensor nach Anspruch 1 bis 4, dadurch gekennzeichnet, daß die Kurvenscheibe mit dem Hebelarm (12) verbunden, vorzugsweise verklipst ist.

6. Füllstandssensor zumindestens einem der Ansprüche 1 bis 5, **dadurch gekennzeichnet,** daß die Magneteinrichtung ein Magnet (7) ist, der zum permanenten Kontakt mit der Stirnseite der Kurvenscheibe (11) beweglich angeordnet ist.

7. Füllstandssensor nach Anspruch 6, **dadurch gekennzeichnet,** daß der Magnet (7) mittels einer Feder (9) zur Anlage auf der Stirnseite der Kurvenscheibe (11) bewegbar ist.

8. Füllstandssensor nach Anspruch 6, **dadurch gekennzeichnet,** daß der Magnet (7) über einen Stößel (10) mit der Kurvenscheibe (11) verbunden ist.

9. Füllstandssensor nach zumindest einem der Ansprüche 1 bis 8, **dadurch gekennzeichnet,** daß die Kurvenscheibe (11) entsprechend der Tank-Kennlinie des Flüssigkeitsbehälters (3) ausgebildet ist.

10. Füllstandssensor nach zumindest einem der Ansprüche 1 bis 9, **dadurch gekennzeichnet,** daß der Füllstandssensor (1) einen mit dem Trägerteil (13) verbunden Flansch (4) besitzt, mit dem er in eine Öffnung des Flüssigkeitsbehälters, vorzugsweise in eine Seitenwand einsetzbar ist.
